# EUROPEAN PATENT SPECIFICATION

(11) **EP 4 413 261 B1**
(45) Date of publication and mention of the grant of the patent: **05.11.2025**
(21) Application number: 22785803.2
(22) Date of filing: 21.09.2022
(51) Int. Cl.: F04B 41/02, F04B 41/06, F04C 23/00

(54) **ASSEMBLY FOR COMPRESSING GAS, METHOD FOR SUPPLYING COMPRESSED GAS, AND USE OF SUCH AN ASSEMBLY**
ANORDNUNG ZUM VERDICHTEN VON GAS, VERFAHREN ZUM ZUFÜHREN VON DRUCKGAS UND VERWENDUNG EINER SOLCHEN ANORDNUNG
ENSEMBLE DE COMPRESSION DE GAZ, PROCÉDÉ D'ALIMENTATION EN GAZ COMPRIMÉ ET UTILISATION D'UN TEL ENSEMBLE

(30) Priority: 04.10.2021 BE 202105773
(43) Date of publication of application: 14.08.2024
(73) Proprietor: ATLAS COPCO AIRPOWER, naamloze vennootschap, 2610 Wilrijk (BE)
(72) Inventor: MARTENS, Kristof Adrien Laura, 2610 Wilrijk (BE); DE SCHAMPHELAERE, Pieter, 2610 Wilrijk (BE)
(74) Representative: Atlas Copco Airpower IP department
(86) International application number: PCT/IB2022/058921
(87) International publication number: WO 2023/057846

(56) References cited:
- WO-A1-2010/116388
- BE-A3- 1 014 297
- CN-A- 108 894 989
- DE-C2- 10 013 098
- FR-A1- 2 966 569
- JP-B2- 3 143 141
- US-A1- 2015 167 660
- US-A1- 2020 200 160

## Description

The invention relates to an assembly for compressing a gas. More specifically, the invention relates to an assembly having a plurality of elements for compressing gas, in particular liquid-injected elements such as water-injected elements and/or oil-injected elements, wherein the operation of the plurality of elements is optimized.

In this context, "element" can mean both a compressor element and a vacuum pump element.

A primary purpose of such an assembly is to compress gas. In an oil-injected element or water-injected element, liquid, said liquid being oil or water, respectively, is added while the gas is compressed in order to lubricate parts of the element, provide a seal and/or provide cooling during the compression process and/or for further secondary reasons. By supplying the liquid, a flow coming from the element will not only contain compressed gas, but will also contain a significant amount of liquid. This liquid is separated from this flow and typically cooled in order to be supplied to the element again via a liquid injection line. The various components that make this operation possible are part of the assembly.

An assembly having a plurality of elements for compressing a gas is in particular advantageous in the case of a highly variable demand for compressed gas. For each operating pressure, an element for compressing gas operates in an energetically optimal manner at an operating point that is a combination of a speed of the element and an injection flow rate and temperature of the liquid. Said optimal operating point is typically located near a maximum load of the element. If an element does not run at said optimal operating point, for example at half load, the energetic efficiency is significantly worse. This means that the same amount of compressed gas produced under partial load has a significantly higher cost than when produced under full load.

In order to improve said efficiency, assemblies having a plurality of elements are provided. At half the total load of an assembly having two elements, for example, this allows one of the two elements to run at or near its optimum operating point and the other of the two elements not to run. This is merely one example, and a person skilled in the art will understand that multiple variations can be conceived that are optimized for different situations. For example, an assembly can be provided having two elements wherein one of the two elements is driven by a motor having a fixed rotational speed and wherein the other of the two elements is driven by a motor having a variable rotational speed. This not only allows the assembly to be energetically optimized, but also allows the cost of the assembly to be optimized.

The document DE10013098 discloses an assembly of compressor systems consisting of several individual compressor systems, comprising a compressor, an oil separator and an oil return conduit provided with an oil cooler, whereby the individual systems are interconnected fluidly at their exit.

The document JP3143141 discloses an assembly of compressor systems consisting of several individual compressor systems, whereby the oil return conduits from the separator to the compressor are interconnected.

It is an object of the invention to further improve the assembly having a plurality of elements.

To this end, the invention provides an assembly for compressing a gas as defined by the accompanying claims, the assembly including at least:
- a first liquid-injected element for compressing gas;
- a first motor for driving the first element;
- a second liquid-injected element for compressing gas;
- a second motor for driving the second element;
- a first liquid circuit related to the first liquid-injected element, which first liquid circuit includes:
   ∘ a first liquid supply line for supplying liquid to a liquid inlet of the first liquid-injected element;
   ∘ a first liquid separator in fluid connection via a first fluid line with a gas outlet of the first liquid-injected element;
   ∘ a first liquid cooler in fluid connection between a liquid outlet of the first liquid separator and the first liquid supply line;
- a second liquid circuit for the second liquid-injected element, which second liquid circuit includes:
   ∘ a second liquid supply line for supplying liquid to a liquid inlet of the second liquid-injected element;
   ∘ a second liquid separator in fluid connection via a second fluid line with a gas outlet of the second liquid-injected element;
   ∘ a second liquid cooler in fluid connection between a liquid outlet of the second liquid separator and the second liquid supply line;
wherein fluid connection is provided between the first liquid circuit and the second liquid circuit.

One advantage of the assembly relates to the flexibility of the assembly to produce a highly variable flow of compressed gas. Said flexibility is, under some circumstances, necessary in order to respond to a highly variable demand for compressed gas. Thereby, the assembly according to the invention is able to continue operating in an energetically optimum and efficient manner despite the highly variable flow. It should be noted that most assemblies, primarily those having one element, become extremely inefficient if a variable flow of compressed gas is produced. By constructing the assembly with two elements that are each driven by their own motor and coupled to their own liquid separator that has its own liquid cooler, an assembly can be constructed on the basis of a need of a user of compressed gas, wherein each element in the construction can function in an energetically optimum manner. Thereby, the compressed gas can be cooled in a gas cooler that is shared between a plurality of elements.

Providing a liquid circuit for each of the plurality of elements is known. A typical liquid circuit is a substantially closed circuit related to one liquid-injected element in order to inject liquid into the element, after which the liquid flows out of the liquid-injected element via a fluid line together with the compressed gas. The fluid line is in fluid connection with a liquid separator where at least a portion, preferably as much as possible, of the liquid is separated from the fluid. The liquid that is separated in the liquid separator is returned to the liquid-injected element via a liquid cooler.

By providing a plurality of liquid-injected elements in the assembly, a plurality of liquid circuits are also provided. The invention relates to providing a coupling between at least two liquid circuits. More specifically, a fluid connection is provided between a first liquid circuit and a second liquid circuit. Said fluid connection allows liquid to be exchanged, as a result of which both an amount of liquid and a pressure of the liquid in the two circuits can be regulated. This allows for further optimization of the assembly.

Preferably, a non-return valve is provided downstream of the gas outlet of each liquid separator. Downstream of the non-return valve, the gas outlets can be combined in order to form a common gas outlet. The presence of the non-return valve, also referred to as a check valve, downstream of each liquid separator also results in a complete pressure separation of the liquid circuits belonging to the two elements, which provides the possibility of starting and stopping the elements independently of each other.

A further non-return valve is preferably placed at an air inlet of each liquid-injected element to ensure that, if the element stops working, it does not reverse, for example, due to the compressed gas still present in the associated liquid separator.

Preferably, said fluid connection includes a first fluid connection line between the first fluid line and the second fluid line. The first fluid line connects the gas outlet of the first liquid-injected element to the first liquid separator. The second fluid line connects the gas outlet of the second liquid-injected element to the second liquid separator. Hence, the first fluid connection line allows one of the first and second liquid-injected elements to supply a pressurized fluid flow to the liquid separator of the other of the first and second liquid-injected elements. Said first fluid connection line allows the fluid flow supplied by the first and second elements to be distributed proportionally between the first and the second liquid separators. If, for example, the first element provides a significantly higher flow rate than the second element, the fluid flow can be redistributed between the elements and the liquid separators in order to allow a substantially equal fluid rate through the two liquid separators. As a result, losses as a consequence of pressure losses in the liquid separators can be minimized. In addition, the use of, for example, filter elements for an additional separation of liquid from the fluid flow in or downstream of the two liquid separators can be equalized, as a result of which the service life of components such as filter elements becomes substantially the same.

Preferably, a first valve is provided in the first fluid connection line. A fluid flow through the first fluid connection line can be regulated via the first valve, thus allowing the fluid flow to be regulated in order to achieve optimum gas and liquid circulation.

Preferably, the first liquid separator includes a first liquid reservoir that includes the liquid outlet of the first liquid separator, and the second liquid separator includes a second liquid reservoir that includes the liquid outlet of the second liquid separator. Preferably, the aforementioned fluid connection further includes a second fluid connection line between the first liquid reservoir and the second liquid reservoir. Liquid can be exchanged between the first liquid circuit and the second liquid circuit via the second fluid connection line. Each liquid circuit loses liquid when supplying compressed gas. In particular in an assembly having a plurality of liquid-injected elements, a situation can arise in which one element has supplied significantly more compressed gas than another element such that an imbalance is created in the amount of liquid in the different liquid circuits. Said imbalance can be eliminated via the second fluid connection line.

Preferably, a second valve is provided in the second fluid connection line. Preferably, a pump is provided in the second fluid connection line in order to actively move liquid through the second fluid connection line.

The second fluid connection line has a further advantage if the first fluid connection line is also used and if a third fluid connection line described below is used. In particular, a portion of the liquid can be moved from one liquid circuit to another liquid circuit via the first and/or third fluid connection line. This creates an imbalance in the amount of liquid in the two liquid circuits, which imbalance can be compensated for via the second fluid connection line.

Preferably, a liquid in the first liquid circuit and in the second liquid circuit is oil. Tests and simulations have shown that a design such as the one described above is in particular advantageous for oil-injected compressors.

Preferably, the aforementioned fluid connection further includes a third fluid connection line between the first liquid supply line and the second liquid supply line. In this case, a third valve is preferably also provided in the third fluid connection line and further valves are also optionally provided, as described below in more detail. This is in particular interesting if one of the liquid-injected elements, for example the second element, runs under zero load, i.e., without supplying compressed gas. In this state, it is necessary to maintain a minimum gas and liquid circulation in the liquid circuit in order to guarantee lubrication and cooling of the second element. Without the third fluid connection line, the second liquid-injected element must provide a minimum pressure in the second liquid separator so that there is sufficient lubrication and cooling of the element from the liquid reservoir. Said minimum pressure in the second liquid separator is made redundant by the third fluid connection line in that the third fluid connection line supplies fluid directly from the first liquid circuit to the second liquid-injected element. The invention also relates to a method for supplying compressed gas via an assembly having a plurality of liquid-injected elements for compressing gas, wherein the method includes:
- providing a liquid connection between a first liquid circuit related to the first of the plurality of liquid-injected elements and a second liquid circuit related to a second of the plurality of liquid-injected elements.

Advantages and effects described above with reference to the assembly apply analogously to the method.

Preferably, providing the fluid connection includes supplying a portion of a fluid from a first liquid circuit related to the first of the plurality of liquid-injected elements to a second liquid circuit related to the second of the plurality of liquid-injected elements.

Preferably, the first of the plurality of liquid-injected elements operates under full load while the second of the plurality of liquid-injected elements operates under partial load or under zero load.

Preferably, the method further includes providing a further fluid connection between the first liquid reservoir related to the first of the plurality of liquid-injected elements and a second liquid reservoir related to the second of the plurality of liquid-injected elements. Preferably, in the further fluid connection liquid is actively moved from one of the first and second liquid reservoirs to another of the first and second liquid reservoirs.

Preferably, an amount of liquid that is supplied via the fluid connection is moved in the opposite direction via the further fluid connection.

In this case, the wording "moved in the opposite direction" means that the amount of liquid that is supplied via the fluid connection from one of the liquid-injected elements to another of the liquid-injected elements is returned via the further fluid connection from the other of the liquid-injected elements to the one of the liquid-injected elements.

Finally, the invention also relates to a use of an assembly according to any of the embodiments described above for supplying a compressed gas by gearing the first motor, which drives the first element, and gearing the second motor, which drives the second element, based on a demand for compressed gas. The demand can be supplied in various ways. More specifically, the demand can be passively supplied, i.e., the consumption of compressed gas causes a pressure drop in a consumer network in such a way that this pressure is directly indicative of the demand for compressed gas. Alternatively, the demand can be actively supplied by forwarding data of consumers. As a further alternative, a demand can be supplied both actively and passively combined. By gearing the motors based on the demand, a variable need for compressed gas in the consumer network can be supplied in an energetically optimum manner.

Preferably, the first motor is a first type of motor having a substantially fixed rotational speed and the second motor is a second type of motor having a variable adjustable rotational speed. A motor having a fixed rotational speed is less expensive and can be better matched to the liquid-injected element coupled thereto in order to supply compressed gas with energetically optimum efficiency. A motor having a variable adjustable rotational speed is, for example, a motor that is coupled to a frequency regulator or voltage regulator and has an adjustable rotational speed. It is clear that neither the construction of the motor nor the manner in which the speed is controlled is the subject of this text and this aspect will therefore not be discussed further. If a liquid-injected element is coupled to a motor having a variable adjustable speed, the liquid-injected element not only needs to be suitable and preferably optimized for supplying compressed gas at the maximum speed, but also suitable and preferably optimized to supply compressed gas at lower speeds than the maximum speed. Such a liquid-injected element coupled to a motor having a variable adjustable rotational speed is therefore typically more expensive and less efficient. The major advantage, however, is that a variable amount of compressed gas can be supplied. In particular, the combination of a motor having a fixed rotational speed in one element and a motor having a variable adjustable speed in another element also partially combines the advantages described above.

The first motor preferably has a lower maximum operating power than the second motor. By providing a motor having a variable adjustable rotational speed with greater power than a motor having a fixed rotational speed, a "control gap" is minimized or even avoided. A control gap can arise if approximately half of a combined maximum deliverable amount of compressed gas is demanded, more specifically if the motor having a fixed rotational speed is switched on while the motor having a variable adjustable rotational speed is geared down or switched off. Tests have shown that if a fixed motor is switched on while a variable motor having the same power is brought to its minimum possible operating speed, the combination of the fixed motor with the variable motor typically supplies a greater amount of compressed gas at a minimum operating speed than if only the variable motor runs at maximum operating speed such that a control gap arises. Tests have also shown that the maximum power of the fixed motor is preferably more than 60%, more preferably more than 80% of the maximum power of the variable motor. Furthermore, the maximum power of the fixed motor is preferably less than 90%, more preferably less than 85% of the maximum power of the variable motor. This optimizes the maximum deliverable amount of compressed gas while minimizing disadvantageous effects of a potential control gap.

The invention will be explained in more detail below using the embodiment examples depicted in the drawings.

In the drawings:
Fig. 1 is a schematic side view of an assembly according to an embodiment of the invention;
Fig. 2 is a flow chart of an assembly according to an embodiment of the invention;
Fig. 3 is a first perspective view of an assembly according to a practical embodiment of the invention;
Fig. 4A-4D show a schematic construction of an assembly according to the invention in which a plurality of use cases are shown; and
Fig. 5A-5D show a schematic construction of an assembly according to the invention in which a plurality of further use situations are shown.

In the drawings, the same reference number is assigned to the same or comparable elements.

The primary purpose of the assembly 1 is to supply compressed gas. To this end, each element 6, 8 in the assembly is primarily provided for compressing the gas to be compressed. By supplying a liquid such as oil or water in the element, a fluid flow coming from the element 6, 8 will not only contain compressed gas, but will also contain a significant amount of liquid. By putting an outlet of each element 6, 8 in fluid connection with an inlet of a liquid separator 10, 12 that, for example, contains a cyclone separator, most of the liquid can be separated from the fluid flow. This offers the further possibility of returning the separated liquid to the element so that a substantially closed liquid circuit is created in which liquid can be reused. In practice, a liquid flow and, optionally, a gas flow coming from a liquid separator are cooled by a liquid cooler and a gas cooler, respectively. Preferably, a non-return valve is provided downstream of each liquid separator. More specifically, a minimum pressure valve having an integrated non-return valve is placed in the proximity of a gas outlet of each liquid separator. This valve ensures that no compressed gas flows back to the liquid separator from lines downstream of the liquid separator. Indeed, this ensures that the liquid circuits can be completely separated from each other in terms of pressure, and that the two elements 6, 8 can thus operate independently of each other. A further non-return valve is preferably placed near a gas inlet of each liquid-injected element to ensure that, if the element stops working, it does not reverse due to the compressed gas still present in the associated liquid separator.

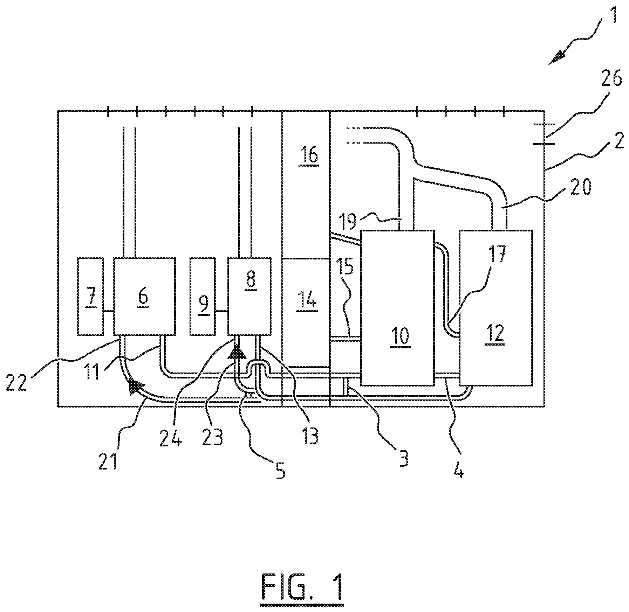

Fig. 1 shows a construction of an assembly 1 according to one embodiment of the invention. The assembly 1 contains a plurality of components for producing compressed gas, which plurality of components are assembled together in a housing 2.

In Fig. 1, the assembly 1 contains a plurality of element 6 and 8 in one housing 2. The advantage of a plurality of elements 6 and 8 in one housing is that a greater fluctuation in a flow rate of compressed gas requested from the assembly 1 can be accommodated by the assembly 1 having a plurality of elements 6 and 8 in comparison with an assembly having only a single element. Furthermore, the efficiency of supplying compressed gas with a varying flow rate is higher if a plurality of elements 6 and 8 are provided. The figures show embodiments with two elements 6 and 8. It is clear that the same principles of the invention can be applied to assemblies 1 having three or more elements. The invention is not limited to an assembly 1 having only two elements 6 and 8.

The elements 6 and 8 can be the same elements or different elements. The motors 7 and 9 that drive the elements 6 and 8, respectively, can be the same motors or different motors and/or can be controlled in the same manner or in different manners. In one embodiment, the two motors 7 and 9 are both fixed-speed motors. Alternatively, the two motors are pole changing motors due to the presence of at least two different coils, as a result of which they can run at at least two fixed speeds. As a further alternative, the two motors 7 and 9 are both variable-speed motors, which are typically controlled by a frequency regulator. As an even further alternative, one of the two motors 7 and 9 is a fixed-speed motor or pole changing motor and a second of the two motors 7 and 9 is a variable-speed motor. The invention is not limited to motors having the same power. The two motors 7 and 9 can thus also have a mutually different power, which is additionally favorable in connection with a regulation in the case of a varying demand for compressed gas. For example, if motor 7 is a fixed-speed motor and motor 9 is a variable-speed motor, it is favorable to choose a power of the variable-speed motor that is greater than a power of the fixed-speed motor so that no control gap arises when the fixed-speed motor is switched on and off. For the sake of clarity, a fixed-speed motor is a motor of a first type having a substantially fixed rotational speed, and a variable-speed motor is a motor of a second type having a variable adjustable rotational speed. In the embodiment shown, the two elements 6 and 8 and the two motors 7 and 9 are provided in the first section 3 of the housing 2.

Each element 6 and 8 is connected to a liquid separator 10 and 12. As explained above, the element 6, 8 is primarily provided for supplying compressed gas. To this end, each element 6 and 8 has a gas outlet connected to a fluid line 11 and 13, respectively. The fluid flow coming from said gas outlet and fluid line 11 and 13 contains not only compressed gas but also a significant amount of liquid. The liquid separators 10 and 12 are in fluid connection with the gas outlets via the fluid lines 11 and 13, respectively, in order to separate the liquid from the fluid flow.

Each liquid separator 10 and 12 can be constructed and optimized for the connected element 6, 8. The liquid separators 10 and 12 can thereby be constructed and/or dimensioned differently. Each liquid separator 10 and 12 preferably contains both a cyclone separator and one or more filter elements for additional separation of liquid from the fluid stream. Each liquid separator 10 and 12 has a liquid outlet 15 and 17, respectively, and a gas outlet 19, 20, respectively. The liquid from the liquid outlets 15 and 17 is returned to the respective element 6, 8 via a respective liquid cooler 14, 16. The compressed gas coming from the two gas outlets 19 and 20 is, after passing through a minimum pressure valve having an integrated check valve, combined and brought to a gas cooler before feeding the compressed gas to a gas outlet 26 of the housing 2. The cooling air supply or exhaust of each of the first liquid cooler 14, second liquid cooler 16 and gas cooler 18 (not shown in Fig. 1) can be controlled separately based on the cooling need so that the assembly 1 can operate optimally and efficiently.

Fig. 1 shows a first fluid connection line 3 between the first fluid line 11 and the second fluid line 13. The first fluid line 11 connects the high pressure outlet of the first liquid-injected element 6 to the first liquid separator 10. The second fluid line 13 connects the high pressure outlet of the second liquid-injected element 8 to the second liquid separator 12. The first fluid connection line 3 also allows one of the first and second liquid-injected elements to supply a pressurized fluid flow to the liquid separator of the second of the first and second liquid-injected elements. Fig. 1 also shows a second fluid connection line 4 between the first liquid separator 10 and the second liquid separator 12 and shows a third fluid connection line 5 between a first liquid supply line 21 that is connected to a liquid inlet 22 of the first liquid-injected elements 6 and a second liquid supply line 23 that is connected to a liquid inlet 24 of the second liquid-injected element 8.

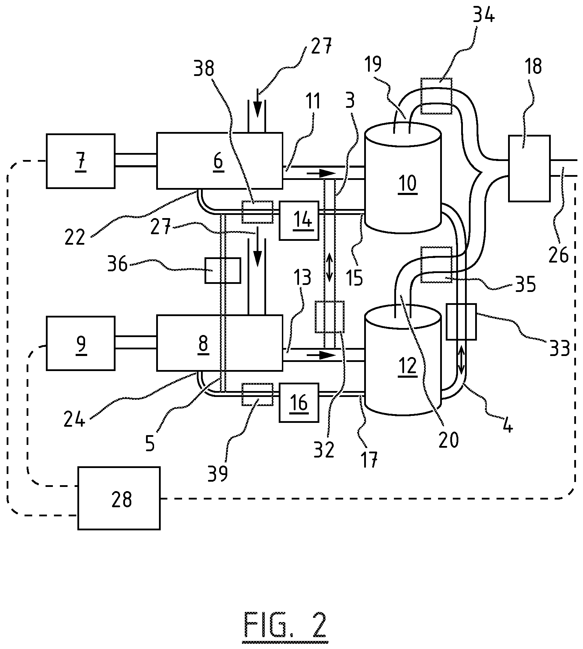

Fig. 2 shows a schematic construction of the assembly 1 from which the operation and interrelationship of the various components is clear. Fig. 2 shows how a first element 6 is driven by a first motor 7. The first element 6 draws gas from a gas inlet 27. If a special gas, for example nitrogen or oxygen have to be compressed, the gas inlet 27 is connected to a gas storage tank or to a gas production facility. The first element 6 further has a liquid inlet 22 and is provided to compress the gas and the liquid to a gas outlet of the first element 6 and first fluid line 11. Said gas outlet and first fluid line 11 are in fluid connection with a first liquid separator 10 because not only compressed gas but also a significant amount of liquid comes out of the gas outlet and first fluid line 11. The first liquid separator 10 separates the fluid flow of the gas outlet and first fluid line 11 into a gas flow and a liquid flow. The liquid flow comes out of the liquid outlet 15 and is returned via the first liquid cooler 14 to the first element 6 so as to form a closed liquid circuit. The gas flow comes out of the gas outlet 19 of the first liquid separator 10 and is fed to the gas outlet 26 of the housing 2, optionally via the gas cooler 18.

Fig. 2 shows how a second element 8 is driven by a second motor 9. The second element 8 draws gas from a gas inlet 27. If a special gas, for example nitrogen or oxygen have to be compressed, the gas inlet 27 is connected to a gas storage tank or to a gas production facility. The second element 8 further has a liquid inlet 24 and is provided to compress the gas and the liquid to a second gas outlet and second fluid line 13. Said gas outlet and second fluid line 13 are in fluid connection with a second liquid separator 12 because not only compressed gas but also a significant amount of liquid comes out of the gas outlet and second fluid line 13. The second liquid separator 12 separates the fluid flow of the gas outlet and second fluid line 12 into a gas flow and a liquid flow. The liquid flow comes out of the liquid outlet 17 and is returned via the second liquid cooler 16 to the second element 8 so as to form a closed liquid circuit. The gas flow comes out of the gas outlet 20 of the second liquid separator 12 and is fed to the gas outlet 26 of the housing 2, optionally via the gas cooler 18.

Fig. 2 shows how the gas outlet 19 of the first liquid separator 10 and the gas outlet 20 of the second liquid separator 12 are brought together before going to the gas cooler 18. The two gas flows out of the liquid separators 10 and 12 are thus cooled by one gas cooler 18. Tests and simulations have shown that this does not entail a significant decrease in efficiency. Fig. 2 also shows how a controller 28 is provided to control the first motor 7 and second motor 9 based on a demand for compressed gas. The controller 28 can thus efficiently control the two elements 6 and 8 separately and/or together to respond to a demand for compressed gas. The controller 28 can also control a cooling air flow rate for the liquid coolers 14 and 16 and/or the gas cooler 18.

The first, second and third fluid connection lines 3, 4 and 5 described above are also shown in Fig. 2. A first valve 32 is shown in the first fluid connection line 3, which first valve is described in more detail below. In addition, a second valve 33 is shown in the second fluid connection line 4, which second valve is described in more detail below. Furthermore, a third valve 36 is shown in the third fluid connection line 5, which third valve is described in more detail below.

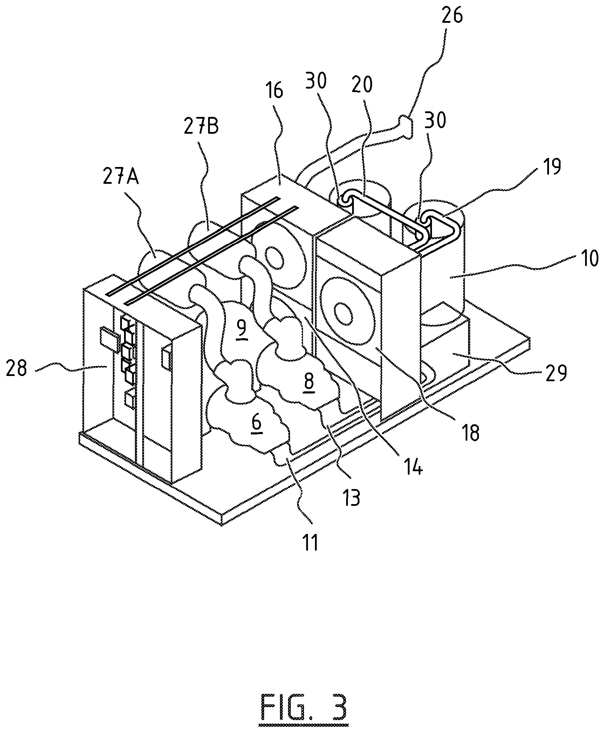

Fig. 3 shows how the first section contains a control cabinet that can, for example, contain the controller 28 from Fig. 2. The control cabinet can also contain devices and cabling for connecting and controlling the different parts of the assembly 1. The control cabinet can read out sensors, contain switching models for motors, for example a frequency regulator, contain protection devices, etc.

Fig. 3 shows how the gas inlet of the elements 6 and 8 can contain a gas inlet filter 27A and 27B. The gas filters 27A and 27B are positioned near a roof element of the housing, which roof element contains openings to allow a cooling air flow into the housing. In the embodiment shown, a rail or support structure is provided between the control cabinet and a central section having the liquid coolers 14, 16 and gas cooler 18 from which the gas filters 27A and 27B can be suspended. This simplifies the installation of the assembly 1.

Each liquid separator 10 and 12 in the embodiment shown has a cyclone separator and is provided with an extra filter element for additional separation of liquid from the fluid flow, indicated by reference sign 30. A person skilled in the art will thereby understand that different kinds and types of liquid separators can be used and/or combined based on need and circumstances. Fig. 3 also schematically shows a component 29 that can include different liquid connections, liquid filters, air vents, pressure regulators, temperature control valves and/or other parts.

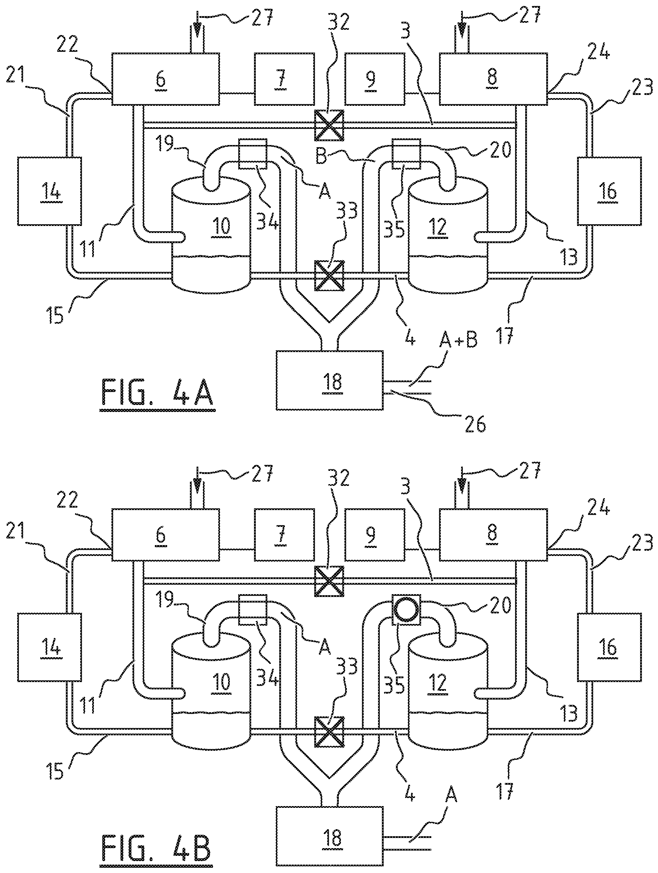

Fig. 4A-4D show a construction that is structurally analogous to the construction of Fig. 2 discussed at length above. The effect of the fluid connection between the first liquid circuit and the second liquid circuit will be explained with reference to Fig. 4A-4D. The fluid connection in Fig. 4A-4D is formed by a first fluid connection line 3 and a second fluid connection line 4.

The first liquid circuit is related to the first liquid-injected element 6. The first liquid circuit comprises the following sequentially: a first fluid line 11 connected to a fluid outlet of the liquid-injected element 6, a first liquid separator 10, a first liquid outlet 15 of the first liquid separator 10, a first liquid cooler 14, a first liquid supply line 21 connected to a liquid inlet 22 of the first liquid-injected element 6. By way of illustration, a liquid level is drawn in the liquid separator 10 in the figure below, which illustrates that the liquid separator 10 forms a first liquid reservoir. It should be clear that the first liquid reservoir can also be provided as an external, extra component in the first liquid circuit.

The second liquid circuit is related to the second liquid-injected element 8. The second liquid circuit comprises the following sequentially: a second fluid line 13 connected to a fluid outlet of the liquid-injected element 8, a second liquid separator 12, a second liquid outlet 17 of the second liquid separator 12, a second liquid cooler 16, a second liquid supply line 23 connected to a liquid inlet 24 of the second liquid-injected element 8. By way of illustration, a liquid level is drawn in the liquid separator 12 in the figure below, which illustrates that the liquid separator 12 forms a second liquid reservoir. It should be clear that the second liquid reservoir can also be provided as an external, extra component in the second liquid circuit.

Fig. 4A shows a situation in which the fluid connection lines 3 and 4 are closed. In particular, the valves 32 and 33 that are provided in the first fluid connection line 3 and in the second fluid connection line 4, respectively, are closed. "Closed" means that a fluid is prevented from flowing through the relevant connection line. In such a situation, the two liquid circuits operate independently of each other. This means that the first liquid-injected element 6 produces a first amount A of compressed gas while the second liquid-injected element 8 produces a second amount B of compressed gas. The total amount of compressed gas at the gas outlet 26 is A plus B.

As described above, a non-return valve is provided downstream of each liquid separator 10, 12. More specifically, a minimum pressure valve having an integrated non-return valve is placed in the proximity of a gas outlet 19, 20 of each liquid separator 10, 12. Said valves are indicated in Fig. 4A-4D with reference signs 34 and 35, respectively. Because both liquid-injected elements 6 and 8 supply compressed gas in Fig. 4A, both minimum pressure valves 34 and 35 are shown open.

Fig. 4B shows a situation that is analogous to the situation of Fig. 4A, the difference being that the first liquid-injected element 6 supplies more compressed gas than the second liquid-injected element 8. The second liquid-injected element 8 runs under partial load. The marked valve 35 illustrates that a flow rate through the second minimum pressure valve 35 is significantly lower.

If the first liquid-injected element 6 supplies more compressed gas than the second liquid-injected element 8, different flow rates through the two liquid separators 10 and 12 are realized. These different flow rates result in different loads on the elements 6 and 8 and in different, i.e., higher and lower losses in the liquid separators 10 and 12.

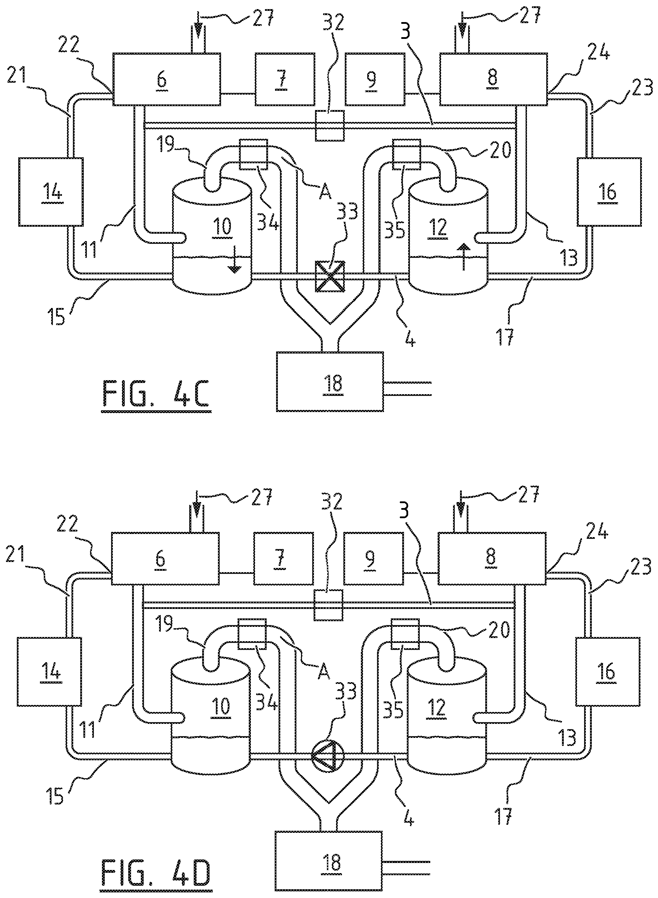

Fig. 4C shows a situation that is analogous to the situation of Fig. 4B, the difference being that the first valve 32 is opened between the first fluid line 11 and the second fluid line 13. A portion of the fluid that flows out of the first liquid-injected element 6 flows through the first fluid connection line 3 to the second liquid separator 12. As a result, a portion of the fluid flow provided by the first liquid-injected element 6 is sent through the second liquid separator 12. In other words, the amount of compressed from the first liquid-injected element 6 is redistributed between the two liquid separators 10 and 12, and the service life of elements related to the liquid separators 10 and 12, for example the filter elements 30, is equalized. In addition, a flow rate from the first liquid separator 10 will typically decrease, as a result of which the pressure drop up to the gas outlet 26 will be lower, which leads to lower energy consumption.

Fig. 4C shows a potential disadvantage by means of the arrows in the first and second liquid separators 10 and 12. More specifically, liquid levels in the liquid reservoirs in the first and second liquid circuit can become unbalanced. In order to correct this, a second fluid connection line 4 is provided. In this case, it should be noted that, in a traditional system, each liquid circuit has sufficient liquid to operate for a predetermined number of operating hours. When gas is compressed, a minimal amount of liquid will always be expelled from the system along with the compressed gas. In the assembly 1 of the invention, an imbalance can arise in the amount of liquid in the respective liquid circuits. This imbalance can arise due to a leak in one of the liquid circuits. The imbalance can also arise due to the first fluid connection line 3, as a result of which a portion of the liquid from the first liquid circuit ends up in the second liquid circuit.

Fig. 4D shows a further situation in which a second fluid connection line 4 is provided between the liquid reservoir in the first liquid circuit and the liquid reservoir in the second liquid circuit. In said second fluid connection line 4, a pump 33 is provided to move liquid from the one liquid circuit to the other liquid circuit in a controlled manner. A person skilled in the art will understand that a pump is merely one way to move liquid. The liquid circuits can also be coupled to one another as communicating vessels so that only one valve is provided in the second fluid connection line 4 to implement or break the connection.

Based on the above, it is clear to a person skilled in the art that providing the second fluid connection can be advantageous without providing the first fluid connection. The second fluid connection can also be advantageous in combination with the first fluid connection, as shown in Fig. 4D.

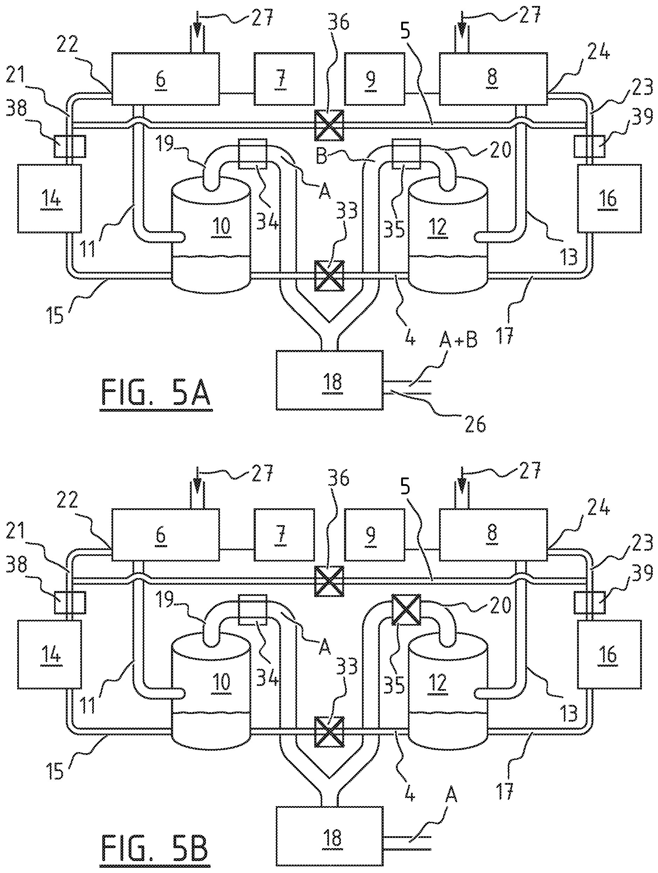

Fig. 5A-5D are analogous to Fig. 4A-4D. The effect of the third fluid connection between the first liquid circuit and the second liquid circuit will be explained with reference to Fig. 5A-5D. The fluid connection in Fig. 5A-5D is formed by a third fluid connection line 5 and a second fluid connection line 4.

The first liquid circuit and the second liquid circuit are analogous to the first and second liquid circuits described above with reference to Fig. 4A-4D.

As described above, a non-return valve is provided downstream of each liquid separator 10, 12. More specifically, a minimum pressure valve having an integrated non-return valve is placed in the proximity of a gas outlet 19, 20 of each liquid separator 10, 12. Said valves are indicated in Fig. 5A-5D with reference signs 34 and 35, respectively. Because both liquid-injected elements 6 and 8 supply compressed gas in Fig. 5A, both minimum pressure valves 34 and 35 are shown open.

Fig. 5B shows a situation that is analogous to the situation of Fig. 5A, the difference being that only the first liquid-injected element 6 supplies compressed gas. The second liquid-injected element 8 runs under zero load, which is illustrated by the closed valve in the second gas outlet 20 of the second liquid separator 12.

If the second liquid-injected element 8 runs under zero load, said element 8 will have to supply sufficient pressure in the liquid separator 12 to guarantee a minimum flow rate of liquid in the second liquid circuit. Said minimum flow rate is necessary to achieve sufficient lubrication and cooling in the second liquid-injecting element 8. Supplying and maintaining said minimum pressure in the liquid separator 12 means that the second motor 9 still requires a significant amount of power, while no compressed gas is sent to the gas outlet 26 by the second liquid-injected element 8. Said power required by the second motor 9 is therefore substantially a complete loss and can amount to up to 20 percent of the power under full load.

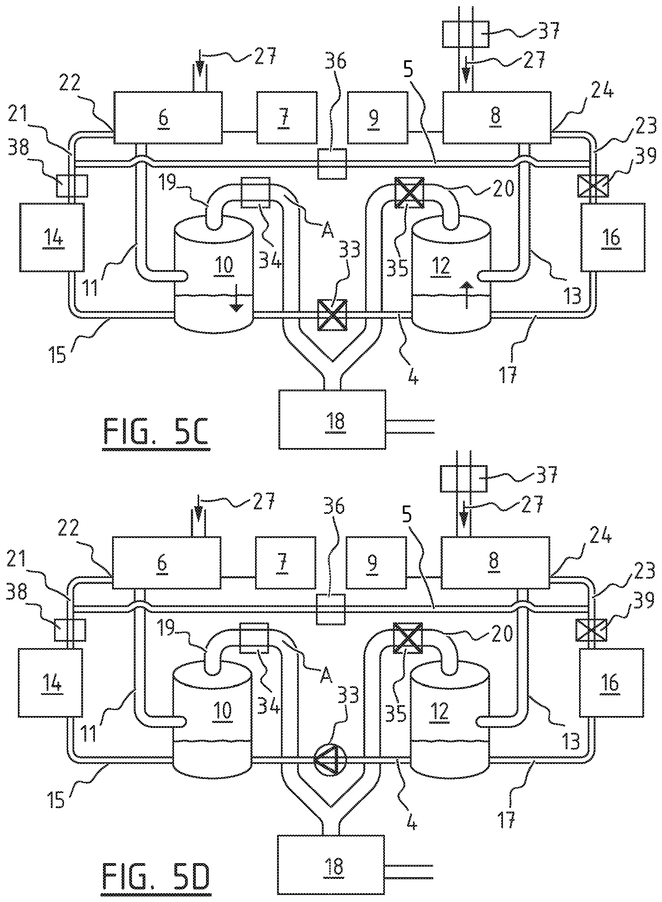

Fig. 5C shows a situation that is analogous to the situation of Fig. 5B, the difference being that the third valve 36 is opened between the first liquid supply line 21 and the second liquid supply line 23. A portion of the fluid that flows out of the first liquid separator 10 flows through the third fluid connection line 5 to the second liquid supply line 23. As a result, liquid is supplied to the second liquid-injected element 8. This allows the second liquid-injected element 8 to run under zero load without said second liquid-injected element supplying a minimum pressure in the second liquid separator 12. Thus, the power that the second motor 9 needs to supply is significantly lower. The second liquid-injected element 8 is therefore significantly more efficient under zero load. In other words, the second liquid separator 12 can be brought to an atmospheric pressure, which means that the second liquid-injected element 8 does not have to supply an overpressure with respect to atmospheric pressure.

The switching between full load and zero load is regulated by providing a valve at the air inlet of the liquid-injected element 8. Said valve is illustrated with reference sign 37. By substantially completely closing the valve 37 under zero load, only a minimal amount of air is drawn into the liquid-injected element 8, which air is compressed from a certain degree of vacuum just downstream of the substantially completely closed valve to atmospheric pressure in the liquid separator 12, where said minimal amount of air is entirely or partially blown out and/or entirely or partially returned to the inlet 27 of the liquid-injected element 8. In this state, the liquid-injected element 8 can run under zero load with minimum energy required by the second motor 9.

In Fig. 5, extra valves 38 and 39 are shown that are located, respectively, between the liquid separators 10 and 12 and an arrival point of the third fluid connection line 5 in the liquid supply lines 21 and 23. Indeed, in the situation described in Fig. 5C with atmospheric pressure in the second liquid separator 12 and supply of pressurized liquid from the first liquid separator 10 to the second liquid supply line 23 via the third fluid connection line 5, a direct liquid flow will also arise in the direction of the second liquid separator 12, which direct liquid flow does not first pass the second element 8, without a closed valve between said arrival point of the third fluid connection line 5 in the second liquid supply line 23 and the second liquid separator 12, which would at least partially negate the described advantage. In Fig. 5C, the valve 39 is closed such that the liquid flowing through the third fluid connection line 5 first flows to and through the second liquid-injected element 8.

Fig. 5C shows a potential disadvantage by means of the arrows in the first and second liquid separators 10 and 12. In particular, liquid levels in the liquid reservoirs in the first and second liquid circuit can become unbalanced. In order to correct this, a second fluid connection line 4 is provided. It should be noted that, in a traditional system, each liquid circuit has sufficient liquid to operate for a predetermined number of operating hours. When gas is compressed, a minimal amount of liquid will always be expelled from the system along with the compressed gas. In the assembly 1 of the invention, an unequal number of operating hours of the two liquid-injected elements 6 and 8 can result in an imbalance in the amount of liquid in the respective liquid circuits. This imbalance can also arise due to a leak in one of the liquid circuits. The imbalance can also arise due to the third fluid connection line 5, as a result of which a portion of the liquid from the first liquid circuit ends up in the second liquid circuit.

Fig. 5D shows a further situation in which a second fluid connection line 4 is provided between the liquid reservoir in the first liquid circuit and the liquid reservoir in the second liquid circuit. In said second fluid connection line 4, a pump 33 is provided to move liquid from the one liquid circuit to the other liquid circuit in a controlled manner. The person skilled in the art will understand that a pump is merely one way to move liquid. The liquid circuits can also be coupled to one another as communicating vessels so that only one valve is provided in the second fluid connection line 4 to implement or break the fluid connection.

Based on the above, it is clear to the person skilled in the art that providing the second fluid connection line 4 can be advantageous without providing the third fluid connection line 5. The second fluid connection line 4 can also be advantageous in combination with the third fluid connection line 5, as shown in Fig. 5D. In addition, it is also possible to provide an assembly in which the first fluid connection line 3, second fluid connection line 4 and third fluid connection line 5 are provided together and used based on the desires of an operator and modes of operation of the assembly.

On the basis of the above description, it will be understood by the skilled person that the invention can be implemented in different ways and based on different principles. In addition, the invention is not limited to the embodiments described above. The embodiments described above, as well as the figures, are merely illustrative and serve only to increase the understanding of the invention. The invention will therefore not be limited to the embodiments described herein, but is defined in the claims.

## Claims

1. An assembly (1) for compressing a gas, the assembly including at least:
- a first liquid-injected element (6) for compressing gas;
- a first motor (7) for driving the first element (6);
- a second liquid-injected element (8) for compressing gas;
- a second motor (9) for driving the second element (8);
- a first liquid circuit related to the first liquid-injected element (6), which first liquid circuit includes:
∘ a first liquid supply line (21) for supplying liquid to a liquid inlet (22) of the first liquid-injected element (6);
∘ a first liquid separator (10) in fluid connection via a first fluid line (11) with a gas outlet of the first liquid-injected element (6), whereby a first non-return valve is provided downstream of a gas outlet of the first liquid separator (10);
∘ a first liquid cooler (14) in fluid connection between a liquid outlet (15) of the first liquid separator (10) and the first liquid supply line (21);
- a second liquid circuit for the second liquid-injected element (8), which second liquid circuit includes:
∘ a second liquid supply line (23) for supplying liquid to a liquid inlet (24) of the second liquid-injected element (8);
∘ a second liquid separator (12) in fluid connection via a second fluid line (13) with a gas outlet of the second liquid-injected element (8), whereby a second non-return valve is provided downstream of a gas outlet of the second liquid separator (12);
∘ a second liquid cooler (16) in fluid connection between a liquid outlet (17) of the second liquid separator (12) and the second liquid supply line (23);
wherein a fluid connection is provided between the first liquid circuit and the second liquid circuit,
wherein the fluid connection includes at least one fluid connection line being
- a first fluid connection line (3) between the first fluid line and the second fluid line;
- a second fluid connection line (4) between a first liquid reservoir that is included in the first liquid separator (10) and includes the liquid outlet (15) of the first liquid separator (10), and a second liquid reservoir that is included in the second liquid separator (12) and includes the liquid outlet (17) of the second liquid separator (12); and/or
- a third fluid connection line (5) between the first liquid supply line (21) and the second liquid supply line (23),
and wherein a valve is provided in each of the first, second and third fluid connection line.

2. The assembly (1) according to claim 1, wherein, if the fluid connection includes the second fluid connection line (4), a pump (33) is provided in the second fluid connection line (4) in order to actively move liquid through the second fluid connection line (4).

3. The assembly (1) according to any of the preceding claims, wherein the liquid in the first liquid circuit and in the second liquid circuit is oil.

4. The assembly (1) according to any of the preceding claims, wherein, if the fluid connection includes the third fluid connection line (5), a fourth valve (38) is provided in the first liquid supply line (21) between the first liquid cooler (14) and an arrival point of the third fluid connection line (5) in the first liquid supply line (21).

5. The assembly (1) according to any one of the preceding claims, wherein, if the fluid connection includes the third fluid connection line (5), a fifth valve (39) is provided in the second liquid supply line (23) between the second liquid cooler (16) and an arrival point of the third fluid connection line (5) in the second liquid supply line (23).

6. A method for supplying compressed gas via an assembly (1) having a plurality of liquid-injected elements (6, 8) for compressing gas, wherein the method includes:
- providing a fluid connection between a first liquid circuit related to the first of the plurality of liquid-injected elements (6) and a second liquid circuit related to a second of the plurality of liquid-injected elements (8),
whereby the first liquid circuit includes:
∘ a first liquid supply line (21) for supplying liquid to a liquid inlet (22) of the first liquid-injected element (6);
∘ a first liquid separator (10) in fluid connection via a first fluid line (11) with a gas outlet of the first liquid-injected element (6), whereby a first non-return valve is provided downstream of a gas outlet of the first liquid separator (10);
∘ a first liquid cooler (14) in fluid connection between a liquid outlet (15) of the first liquid separator (10) and the first liquid supply line (21),
and whereby the second liquid circuit includes:
∘ a second liquid supply line (23) for supplying liquid to a liquid inlet (24) of the second liquid-injected element (8);
∘ a second liquid separator (12) in fluid connection via a second fluid line (13) with a gas outlet of the second liquid-injected element (8), whereby a second non-return valve is provided downstream of a gas outlet of the second liquid separator (12);
∘ a second liquid cooler (16) in fluid connection between a liquid outlet (17) of the second liquid separator (12) and the second liquid supply line (23)
wherein the fluid connection includes at least one fluid connection line being
- a first fluid connection line (3) between the first fluid line and the second fluid line;
- a second fluid connection line (4) between a first liquid reservoir that is included in the first liquid separator (10) and includes the liquid outlet (15) of the first liquid separator (10), and the second liquid reservoir that is included in the second liquid separator (12) and includes the liquid outlet (17) of the second liquid separator (12); and/or
- a third fluid connection line (5) between the first liquid supply line (21) and the second liquid supply line (23),
and wherein a valve is provided in each of the first, second and third fluid connection line.

7. The method according to claim 6, wherein providing the fluid connection includes supplying a portion of a fluid from a first liquid circuit related to the first of the plurality of liquid-injected elements (6) to a second liquid circuit related to the second of the plurality of liquid-injected elements (8), wherein preferably the first of the plurality of liquid-injected elements operates under full load while the second of the plurality of liquid-injected elements operates under partial load or under zero load.

8. The method according to claim 6 or 7, wherein the method further includes providing a further fluid connection between a first liquid reservoir related to the first of the plurality of liquid-injected elements (6, 8) and a second liquid reservoir related to the second of the plurality of liquid-injected elements (6, 8).

9. The method according to claim 8, wherein in the further fluid connection liquid is actively moved from one of the first and second liquid reservoirs to another of the first and second liquid reservoirs.

10. The method according to claim 9, wherein an amount of liquid that is conducted via the fluid connection is moved in the opposite direction via the further fluid connection.

11. Use of an assembly (1) according to any of the claims 1-5 for supplying a compressed gas by gearing the first motor (7), which drives the first element (6), and gearing the second motor (9), which drives the second element (8), based on a demand for compressed gas,
whereby preferably
- the first motor (7) is a first type of motor having a substantially fixed rotational speed and wherein the second motor (9) is a second type of motor having a variable adjustable rotational speed; and/or
- the first motor (7) has a lower maximum operating power than the second motor (9).

## Patentansprüche

1. Anordnung (1) zum Verdichten eines Gases, die Anordnung mindestens einschließend:
- ein erstes flüssigkeitsinjiziertes Element (6) zum Verdichten von Gas;
- einen ersten Motor (7) zum Antreiben des ersten Elements (6);
- ein zweites flüssigkeitsinjiziertes Element (8) zum Verdichten von Gas;
- einen zweiten Motor (9) zum Antreiben des zweiten Elements (8);
- einen ersten Flüssigkeitskreislauf in Bezug auf das erste flüssigkeitsinjizierte Element (6), wobei der erste Flüssigkeitskreislauf einschließt:
∘ eine erste Flüssigkeitszuführleitung (21) zum Zuführen von Flüssigkeit zu einem Flüssigkeitseinlass (22) des ersten flüssigkeitsinjizierten Elements (6);
∘ einen ersten Flüssigkeitsabscheider (10) über eine erste Fluidleitung (11) in Fluidverbindung mit einem Gasauslass des ersten flüssigkeitsinjizierten Elements (6), wobei ein erstes Rückschlagventil stromabwärts eines Gasauslasses des ersten Flüssigkeitsabscheiders (10) bereitgestellt ist;
∘ einen ersten Flüssigkeitskühler (14) in Fluidverbindung zwischen einem Flüssigkeitsauslass (15) des ersten Flüssigkeitsabscheiders (10) und der ersten Flüssigkeitszuführleitung (21);
- einen zweiten Flüssigkeitskreislauf für das zweite flüssigkeitsinjizierte Element (8), wobei der zweite Flüssigkeitskreislauf einschließt:
∘ eine zweite Flüssigkeitszuführleitung (23) zum Zuführen von Flüssigkeit zu einem Flüssigkeitseinlass (24) des zweiten flüssigkeitsinjizierten Elements (8);
∘ einen zweiten Flüssigkeitsabscheider (12) über eine zweite Fluidleitung (13) in Fluidverbindung mit einem Gasauslass des zweiten flüssigkeitsinjizierten Elements (8), wobei ein zweites Rückschlagventil stromabwärts eines Gasauslasses des zweiten Flüssigkeitsabscheiders (12) bereitgestellt ist;
∘ einen zweiten Flüssigkeitskühler (16) in Fluidverbindung zwischen einem Flüssigkeitsauslass (17) des zweiten Flüssigkeitsabscheiders (12) und der zweiten Flüssigkeitszuführleitung (23);
wobei eine Fluidverbindung zwischen dem ersten Flüssigkeitskreislauf und dem zweiten Flüssigkeitskreislauf bereitgestellt ist,
wobei die Fluidverbindung mindestens eine Fluidverbindungsleitung einschließt, die
- eine erste Fluidverbindungsleitung (3) zwischen der ersten Fluidleitung und der zweiten Fluidleitung;
- eine zweite Fluidverbindungsleitung (4) zwischen einem ersten Flüssigkeitsreservoir, das in den ersten Flüssigkeitsabscheider (10) eingeschlossen ist und den Flüssigkeitsauslass (15) des ersten Flüssigkeitsabscheiders (10) einschließt, und einem zweiten Flüssigkeitsreservoir, das in den zweiten Flüssigkeitsabscheider (12) eingeschlossen ist und den Flüssigkeitsauslass (17) des zweiten Flüssigkeitsabscheiders (12) einschließt; und/oder
- eine dritte Fluidverbindungsleitung (5) zwischen der ersten Flüssigkeitszuführleitung (21) und der zweiten Flüssigkeitszuführleitung (23) ist, und
wobei ein Ventil in jeder von der ersten, der zweiten und der dritten Fluidverbindungsleitung bereitgestellt ist.

2. Anordnung (1) nach Anspruch 1, wobei, wenn die Fluidverbindung die zweite Fluidverbindungsleitung (4) einschließt, eine Pumpe (33) in der zweiten Fluidverbindungsleitung (4) bereitgestellt ist, um Flüssigkeit aktiv durch die zweite Fluidverbindungsleitung (4) zu bewegen.

3. Anordnung (1) nach einem der vorstehenden Ansprüche, wobei die Flüssigkeit im ersten Flüssigkeitskreislauf und im zweiten Flüssigkeitskreislauf Öl ist.

4. Anordnung (1) nach einem der vorstehenden Ansprüche, wobei, wenn die Fluidverbindung die dritte Fluidverbindungsleitung (5) einschließt, ein viertes Ventil (38) in der ersten Flüssigkeitszuführleitung (21) zwischen dem ersten Flüssigkeitskühler (14) und einem Ankunftspunkt der dritten Fluidverbindungsleitung (5) in der ersten Flüssigkeitszuführleitung (21) bereitgestellt ist.

5. Anordnung (1) nach einem der vorstehenden Ansprüche, wobei, wenn die Fluidverbindung die dritte Fluidverbindungsleitung (5) einschließt, ein fünftes Ventil (39) in der zweiten Flüssigkeitszuführleitung (23) zwischen dem zweiten Flüssigkeitskühler (16) und einem Ankunftspunkt der dritten Fluidverbindungsleitung (5) in der zweiten Flüssigkeitszuführleitung (23) bereitgestellt ist.

6. Verfahren zum Zuführen von verdichtetem Gas über eine Anordnung (1), die eine Vielzahl von flüssigkeitsinjizierten Elementen (6, 8) zum Verdichten von Gas aufweist, wobei das Verfahren einschließt:
- Bereitstellen einer Fluidverbindung zwischen einem ersten Flüssigkeitskreislauf in Bezug auf ein erstes der Vielzahl von flüssigkeitsinjizierten Elementen (6) und einem zweiten Flüssigkeitskreislauf in Bezug auf ein zweites der Vielzahl von flüssigkeitsinjizierten Elementen (8),
wobei der erste Flüssigkeitskreislauf einschließt:
∘ eine erste Flüssigkeitszuführleitung (21) zum Zuführen von Flüssigkeit zu einem Flüssigkeitseinlass (22) des ersten flüssigkeitsinjizierten Elements (6);
∘ einen ersten Flüssigkeitsabscheider (10) über eine erste Fluidleitung (11) in Fluidverbindung mit einem Gasauslass des ersten flüssigkeitsinjizierten Elements (6), wobei ein erstes Rückschlagventil stromabwärts eines Gasauslasses des ersten Flüssigkeitsabscheiders (10) bereitgestellt ist;
∘ einen ersten Flüssigkeitskühler (14) in Fluidverbindung zwischen einem Flüssigkeitsauslass (15) des ersten Flüssigkeitsabscheiders (10) und der ersten Flüssigkeitszuführleitung (21),
und wobei der zweite Flüssigkeitskreislauf einschließt:
∘ eine zweite Flüssigkeitszuführleitung (23) zum Zuführen von Flüssigkeit zu einem Flüssigkeitseinlass (24) des zweiten flüssigkeitsinjizierten Elements (8);
∘ einen zweiten Flüssigkeitsabscheider (12) über eine zweite Fluidleitung (13) in Fluidverbindung mit einem Gasauslass des zweiten flüssigkeitsinjizierten Elements (8), wobei ein zweites Rückschlagventil stromabwärts eines Gasauslasses des zweiten Flüssigkeitsabscheiders (12) bereitgestellt ist;
∘ einen zweiten Flüssigkeitskühler (16) in Fluidverbindung zwischen einem Flüssigkeitsauslass (17) des zweiten Flüssigkeitsabscheiders (12) und der zweiten Flüssigkeitszuführleitung (23),
wobei die Fluidverbindung mindestens eine Fluidverbindungsleitung einschließt, die
- eine erste Fluidverbindungsleitung (3) zwischen der ersten Fluidleitung und der zweiten Fluidleitung;
- eine zweite Fluidverbindungsleitung (4) zwischen einem ersten Flüssigkeitsreservoir, das in den ersten Flüssigkeitsabscheider (10) eingeschlossen ist und den Flüssigkeitsauslass (15) des ersten Flüssigkeitsabscheiders (10) einschließt, und einem zweiten Flüssigkeitsreservoir, das in den zweiten Flüssigkeitsabscheider (12) eingeschlossen ist und den Flüssigkeitsauslass (17) des zweiten Flüssigkeitsabscheiders (12) einschließt; und/oder
- eine dritte Fluidverbindungsleitung (5) zwischen der ersten Flüssigkeitszuführleitung (21) und der zweiten Flüssigkeitszuführleitung (23) ist, und
wobei ein Ventil in jeder von der ersten, der zweiten und der dritten Fluidverbindungsleitung bereitgestellt ist.

7. Verfahren nach Anspruch 6, wobei das Bereitstellen der Fluidverbindung ein Zuführen eines Teils eines Fluids aus einem ersten Flüssigkeitskreislauf in Bezug auf das erste der Vielzahl von flüssigkeitsinjizierten Elementen (6) zu einem zweiten Flüssigkeitskreislauf in Bezug auf das zweite der Vielzahl von flüssigkeitsinjizierten Elementen (8) einschließt, wobei vorzugsweise das erste der Vielzahl von flüssigkeitsinjizierten Elementen unter Volllast arbeitet, während das zweite der Vielzahl von flüssigkeitsinjizierten Elementen unter Teillast oder unter Nulllast arbeitet.

8. Verfahren nach Anspruch 6 oder 7, wobei das Verfahren weiter ein Bereitstellen einer weiteren Fluidverbindung zwischen einem ersten Flüssigkeitsreservoir in Bezug auf das erste der Vielzahl von flüssigkeitsinjizierten Elementen (6, 8) und einem zweiten Flüssigkeitsreservoir in Bezug auf das zweite der Vielzahl von flüssigkeitsinjizierten Elementen (6, 8) einschließt.

9. Verfahren nach Anspruch 8, wobei in der weiteren Fluidverbindung Flüssigkeit aktiv von einem von dem ersten und dem zweiten Flüssigkeitsreservoir zu einem anderen von dem ersten und dem zweiten Flüssigkeitsreservoir bewegt wird.

10. Verfahren nach Anspruch 9, wobei eine Menge an Flüssigkeit, die über die Fluidverbindung geleitet wird, über die weitere Fluidverbindung in die entgegengesetzte Richtung bewegt wird.

11. Verwendung einer Anordnung (1) nach einem der Ansprüche 1-5 zum Zuführen eines verdichteten Gases durch in Gang setzen des ersten Motors (7), der das erste Element (6) antreibt, und in Gang setzen des zweiten Motors (9), der das zweite Element (8) antreibt, basierend auf einem Bedarf an verdichtetem Gas,
wobei vorzugsweise
- der erste Motor (7) ein erster Typ eines Motors ist, der eine im Wesentlichen festen Drehzahl aufweist und wobei der zweite Motor (9) ein zweiter Typ eines Motors ist, der eine einstellbare Drehzahl aufweist; und/oder
- der erste Motor (7) eine niedrigere maximale Betriebsleistung aufweist als der zweite Motor (9).

## Revendications

1. Assemblage (1) destiné à la compression d'un gaz ; dans lequel l'assemblage englobe au moins :
- un premier élément (6) du type à injection de liquide, qui est destiné à la compression du gaz ;
- un premier moteur (7) qui est destiné à entraîner le premier élément (6) ;
- un deuxième élément (8) du type à injection de liquide, qui est destiné à la compression du gaz ;
- un deuxième moteur (9) qui est destiné à entraîner le deuxième élément (8) ;
- un premier circuit de liquide lié au premier élément (6) du type à injection de liquide ; dans lequel ledit premier circuit de liquide englobe :
• une première conduite d'alimentation en liquide (21), qui est destinée à alimenter en liquide une entrée (22) pour le liquide, du premier élément (6) du type à injection de liquide ;
• un premier séparateur de liquide (10) qui est mis en communication par fluide par l'intermédiaire d'une première conduite (11) pour le fluide, avec une sortie pour le gaz, du premier élément (6) du type à injection de liquide ; dans lequel un premier clapet antiretour est prévu en aval d'une sortie pour le gaz, du premier séparateur de liquide (10) ;
• un premier refroidisseur de liquide (14) qui est mis en communication par fluide entre une sortie (15) pour le liquide, du premier séparateur de liquide (10), et la première conduite d'alimentation en liquide (21) ;
- un deuxième circuit de liquide pour le deuxième élément (8) du type à injection de liquide ; dans lequel ledit deuxième circuit de liquide englobe :
• une deuxième conduite d'alimentation en liquide (23), qui est destinée à alimenter en liquide une entrée (24) pour le liquide, du deuxième élément (8) du type à injection de liquide ;
• un deuxième séparateur de liquide (12) qui est mis en communication par fluide par l'intermédiaire d'une deuxième conduite (13) pour le fluide, avec une sortie pour le gaz, du deuxième élément (8) du type à injection de liquide ; dans lequel un deuxième clapet antiretour est prévu en aval d'une sortie pour le gaz, du deuxième séparateur de liquide (12) ;
• un deuxième refroidisseur de liquide (16) qui est mis en communication par fluide entre une sortie (17) pour le liquide, du deuxième séparateur de liquide (12), et la deuxième conduite d'alimentation en liquide (23) ;
dans lequel on prévoit une liaison par fluide entre le premier circuit de liquide et le deuxième circuit de liquide ;
dans lequel la liaison par fluide englobe au moins une conduite de liaison par fluide, à savoir :
- une première conduite de liaison par fluide (3) entre la première conduite pour fluide et la deuxième conduite pour fluide ;
- une deuxième conduite de liaison par fluide (4) entre un premier réservoir de liquide qui est inclus dans le premier séparateur de liquide (10) et qui englobe la sortie (15) pour le liquide, du premier séparateur de liquide (10) ; et un deuxième réservoir de liquide qui est inclus dans le deuxième séparateur de liquide (12) et qui englobe la sortie (17) pour le liquide, du deuxième séparateur de liquide (12) ; et/ou
- une troisième conduite de liaison par fluide (5) entre la première conduite d'alimentation en liquide (21) et la deuxième conduite d'alimentation en liquide (23) ; et
dans lequel une vanne est prévue dans chaque conduite de liaison par fluide parmi la première, la deuxième et la troisième conduite de liaison par fluide.

2. Assemblage (1) selon la revendication 1, dans lequel, lorsque la liaison par fluide englobe la deuxième conduite de liaison par fluide (4), une pompe (33) est prévue dans la deuxième conduite de liaison par fluide (4) dans le but de déplacer activement du liquide à travers la deuxième conduite de liaison par fluide (4).

3. Assemblage (1) selon l'une quelconque des revendications précédentes, dans lequel le liquide, dans le premier circuit de liquide et dans le deuxième circuit de liquide, est de l'huile.

4. Assemblage (1) selon l'une quelconque des revendications précédentes, dans lequel, lorsque la liaison par fluide englobe la troisième conduite de liaison par fluide (5), une quatrième vanne (38) est prévue dans la première conduite d'alimentation en liquide (21) entre le premier refroidisseur de liquide (14) et un point d'arrivée de la troisième conduite de liaison par fluide (5) dans la première conduite d'alimentation en liquide (21).

5. Assemblage (1) selon l'une quelconque des revendications précédentes, dans lequel, lorsque la liaison par fluide englobe la troisième conduite de liaison par fluide (5), une cinquième vanne (39) est prévue dans la deuxième conduite d'alimentation en liquide (23) entre le deuxième refroidisseur de liquide (16) et un point d'arrivée de la troisième conduite de liaison par fluide (5) dans la deuxième conduite d'alimentation en liquide (23).

6. Procédé destiné à alimenter du gaz comprimé par l'intermédiaire d'un assemblage (1) qui possède un certain nombre d'éléments (6, 8) du type à injection de liquide destinés à la compression du gaz ; dans lequel le procédé englobe le fait de :
- procurer une liaison par fluide entre un premier circuit de liquide lié au premier élément choisi parmi lesdits plusieurs éléments (6) du type à injection de liquide et un deuxième circuit de liquide lié à un deuxième élément choisi parmi lesdits plusieurs éléments (8) du type à injection de liquide ;
dans lequel le premier circuit de liquide englobe :
• une première conduite d'alimentation en liquide (21), qui est destinée à alimenter en liquide une entrée (22) pour le liquide, du premier élément (6) du type à injection de liquide ;
• un premier séparateur de liquide (10) qui est mis en communication par fluide par l'intermédiaire d'une première conduite (11) pour le fluide, avec une sortie pour le gaz, du premier élément (6) du type à injection de liquide ; dans lequel un premier clapet antiretour est prévu en aval d'une sortie pour le gaz, du premier séparateur de liquide (10) ;
• un premier refroidisseur de liquide (14) qui est mis en communication par fluide entre une sortie (15) pour le liquide, du premier séparateur de liquide (10), et la première conduite d'alimentation en liquide (21) ;
et dans lequel le deuxième circuit de liquide englobe :
• une deuxième conduite d'alimentation en liquide (23), qui est destinée à alimenter en liquide une entrée (24) pour le liquide, du deuxième élément (8) du type à injection de liquide ;
• un deuxième séparateur de liquide (12) qui est mis en communication par fluide par l'intermédiaire d'une deuxième conduite (13) pour le fluide, avec une sortie pour le gaz, du deuxième élément (8) du type à injection de liquide ; dans lequel un deuxième clapet antiretour est prévu en aval d'une sortie pour le gaz, du deuxième séparateur de liquide (12) ;
• un deuxième refroidisseur de liquide (16) qui est mis en communication par fluide entre une sortie (17) pour le liquide, du deuxième séparateur de liquide (12), et la deuxième conduite d'alimentation en liquide (23) ;
dans lequel la liaison par fluide englobe au moins une conduite de liaison par fluide, à savoir :
- une première conduite de liaison par fluide (3) entre la première conduite pour fluide et la deuxième conduite pour fluide ;
- une deuxième conduite de liaison par fluide (4) entre un premier réservoir de liquide qui est inclus dans le premier séparateur de liquide (10) et qui englobe la sortie (15) pour le liquide, du premier séparateur de liquide (10), et le deuxième réservoir de liquide qui est inclus dans le deuxième séparateur de liquide (12) et qui englobe la sortie (17) pour le liquide, du deuxième séparateur de liquide (12) ; et/ou
- une troisième conduite de liaison par fluide (5) entre la première ligne d'alimentation en liquide (21) et la deuxième ligne d'alimentation en liquide (23) ;
et dans lequel une vanne est prévue dans chaque conduite de liaison par fluide parmi la première, la deuxième et la troisième conduite de liaison par fluide.

7. Procédé selon la revendication 6, dans lequel on procure le fait que la liaison par fluide englobe le fait d'alimenter une portion d'un fluide, à partir d'un circuit de liquide lié au premier élément choisi parmi lesdits plusieurs éléments (6) du type à injection de liquide, à un deuxième circuit de liquide lié au deuxième élément choisi parmi lesdits plusieurs éléments (8) du type à injection de liquide ; dans lequel, de préférence, le premier élément parmi lesdits plusieurs éléments du type à injection de liquide travaille dans des conditions de pleine charge, tandis que le deuxième élément parmi lesdits plusieurs éléments du type à injection de liquide travaille dans des conditions de charge partielle ou dans des conditions de charge nulle.

8. Procédé selon la revendication 6 ou 7, dans lequel le procédé englobe en outre le fait de procurer une liaison par fluide supplémentaire entre un premier réservoir de liquide lié au premier élément choisi parmi lesdits plusieurs éléments (6, 8) du type à injection de liquide et un deuxième réservoir de liquide lié au deuxième élément choisi parmi lesdits plusieurs éléments (6, 8) du type à injection de liquide.

9. Procédé selon la revendication 8, dans lequel, dans la liaison par fluide supplémentaire, du liquide est déplacé de manière active à partir d'un réservoir choisi parmi le premier et le deuxième réservoir de liquide jusqu'à l'autre réservoir choisi parmi le premier et le deuxième réservoir de liquide.

10. Procédé selon la revendication 9, dans lequel une quantité de liquide qui est transportée par l'intermédiaire de la liaison par fluide est déplacée dans la direction opposée par l'intermédiaire de la liaison par fluide supplémentaire.

11. Utilisation d'un assemblage (1) selon l'une quelconque des revendications 1 à 5, pour l'alimentation d'un gaz comprimé par l'intermédiaire de la commande du premier moteur (7) qui entraîne le premier élément (6) et de la commande du deuxième moteur (9) qui entraîne le deuxième élément (8) en se basant sur une demande qui s'adresse à du gaz comprimé ;
dans lequel, de préférence :
- le premier moteur (7) représente un premier type de moteur qui possède une vitesse de rotation essentiellement fixe et le deuxième moteur (9) représente un deuxième type de moteur qui possède une vitesse de rotation variable qui peut être réglée ; et/ou
- le premier moteur (7) possède de préférence une puissance utile maximale qui est inférieure à celle du deuxième moteur (9).
